(19) Europäisches Patentamt
European Patent Office
Office européen des brevets

(11) **EP 2 746 945 B1**

(12) **EUROPÄISCHE PATENTSCHRIFT**

(45) Veröffentlichungstag und Bekanntmachung des Hinweises auf die Patenterteilung:
**22.01.2020   Patentblatt 2020/04**

(51) Int Cl.:
***G06F 9/50*** *(2006.01)*

(21) Anmeldenummer: **13005731.8**

(22) Anmeldetag: **09.12.2013**

(54) **Verfahren und Vorrichtung zum Steuern von DSP-Kanälen**

Method and device for controlling DSP channels

Procédé et dispositif de commande de canaux DSP

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.12.2012   DE 102012024881**

(43) Veröffentlichungstag der Anmeldung:
**25.06.2014   Patentblatt 2014/26**

(73) Patentinhaber: **Unify GmbH & Co. KG**
**80807 München (DE)**

(72) Erfinder:
• **Georg, Detlef**
**51147 Köln (DE)**
• **Marx, Günter**
**45473 Mühlheim (DE)**
• **Roth, Roland**
**45886 Gelsenkirchen (DE)**
• **Schönfeld, Norbert**
**44309 Dortmund (DE)**
• **Willmann, Michael**
**58454 Witten (DE)**

(74) Vertreter: **Fritzsche, Thomas**
**Fritzsche Patent**
**Naupliastraße 110**
**81545 München (DE)**

(56) Entgegenhaltungen:
**US-B1- 7 929 441**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

**Beschreibung**

Die Erfindung betrifft ein Verfahren und eine Vorrichtung zum Steuern von DSP-Kanälen, genauer gesagt, zum Verwalten von Kanälen auf digitalen Signalprozessoren.

In Telekommunikationsanwendungen und -einrichtungen wird oft die digitale Signalverarbeitung mit Hilfe von digitalen Signalprozessoren (DSPen), insbesondere für Aufbau und Aufrechterhaltung von Verbindungen und zur Übertragung von Sprachsignalen, eingesetzt. Solche Anordnungen nach dem Stand der Technik sind beispielsweise auch aus der Druckschrift US 7929441 B1 bekannt. Dabei dienen die DSPen auch zur digitalen Kodierung und Dekodierung von Signalen, insbesondere Sprachsignalen. Zur Kodierung und Dekodierung der übertragenen Signale wird dabei auf vordefinierte Verfahren, sogenannte Codecs, zurückgegriffen. Beispiele für Audio-Codecs sind unter den Bezeichnungen G.711, G. 722, G.723, G.728, G.729, T.38, etc. bekannt und normiert, die sich unter anderem in der erforderlichen Rechenleistung (sog. Performancebedarf) voneinander unterscheiden. Wenn ein Performancebedarf eines Codec die verfügbare Leistung (Performance) eines DSP übersteigt, kommt es zur Überlastung des DSP. Dies kann bei einer Neuzuweisung einer Verbindung an einen Kanal eines DSP durch einen auf einem Host-Prozessor laufenden Kanalverwaltungsprozess oder bei einem von einem Verbindungspartner angeforderten Codecwechsel auf einem Kanal geschehen. In einem solchen Fall kann die Sprachqualität eines Übertragungskanals leiden oder der Kanal bzw. die Verbindung unterbrochen werden.

Um eine Überlastung der DSPen und damit einhergehende Verbindungsabbrüche bzw. schlechte Sprachqualität zu vermeiden, ist es bekannt, eine Kanalverwaltung auf der Basis des rechenintensivsten Codecs durchzuführen. D. h., ein Kanal wird nur dann aufgebaut, wenn der hierzu vorgesehene DSP ausreichende Kapazität aufweist, um den Kanal auch mit dem Codec der höchsten geforderten Rechenleistung aufrechtzuerhalten. Dabei kann ein Verbindungsaufbau frühzeitig abgewiesen werden, und es bleibt ein jederzeitiger Codec-Wechsel möglich, welcher vom Partner angefordert oder durch Leistungsmerkmale notwendig werden kann.

Wird bei diesem Kanalverwaltungsverfahren zu einem bestimmten Zeitpunkt ein Codec niedrigerer als der höchsten Rechenleistung verwendet, werden Kapazitäten vorgehalten, die zu diesem Zeitpunkt nicht benötigt werden. Der DSP wird daher nicht optimal ausgenutzt.

Es ist eine Aufgabe der vorliegenden Erfindung, eine sichere Kanalverwaltung bereitzustellen, bei der eine Überlast verhindert werden kann und ein DSP gleichzeitig besser ausgelastet bzw. seine Rechenkapazität besser ausgenutzt werden kann.

Die Aufgabe wird erfindungsgemäß durch das Verfahren zur Kanalverwaltung auf digitalen Prozessoren nach Anspruch 1 und durch eine entsprechende Vorrichtung zur Kanalverwaltung auf digitalen Signalprozessoren nach Anspruch 8 gelöst. Vorteilhafte Ausführungsformen und Weiterentwicklungen der Erfindung sind in den Unteransprüchen angegeben.

Gemäß einem Gesichtspunkt der Erfindung wird ein Verfahren zur Kanalverwaltung auf digitalen Signalprozessoren (DSP) vorgeschlagen, wobei die Kanalverwaltung zu jedem Zeitpunkt anhand einer momentanen Auslastung jedes DSP unter Berücksichtigung eines tatsächlichen Leistungsbedarfs jedes Kanals und eines maximalen Gesamtleistungsvermögens jedes DSP erfolgt. Dadurch wird eine dynamische Kanalverwaltung möglich derart, dass zu jedem Zeitpunkt, in welchem ein Kanalverwaltungsvorgang, der eine Leistungsanforderung betrifft, durchgeführt wird, eine Bestimmung der tatsächlichen momentanen Auslastung erfolgt. Dadurch kann eine starre Reservierung von Leistungsreserven, die tatsächlich momentan nicht benötigt werden, vermieden werden und kann demzufolge die Auslastung der DSP verbessert werden. Unter einer Kanalverwaltung wird dabei insbesondere die Zuweisung von Ressourcen von DSPen verstanden wie beispielsweise, aber nicht nur, die Neubelegung eines Kanals, wenn eine Verbindung neu aufgebaut werden soll, oder die Freigabe von Performance, wenn sich die Leistungsanforderungen einer bestehenden Kommunikationsverbindung ändern.

Bei der Ermittlung der Auslastung eines betrachteten DSP wird ein Sicherheitszuschlag zur tatsächlichen Beanspruchung durch gegenwärtig belegte oder zu belegende Kanäle berücksichtigt. Durch einen Sicherheitszuschlag können Schwankungen im Leistungsvermögen und/oder in den Anforderungen, beispielsweise durch Änderungen im Codec in einer laufenden Kommunikation, dynamisch berücksichtigt werden. Dabei ist unter einem belegten Kanal ein Kanal zu verstehen, über welchen bereits Kommunikationen abgewickelt werden, und ist unter einem zu belegenden Kanal eine in Bearbeitung befindliche Anfrage, einen Kanal für eine Kommunikation neu zu belegen, zu verstehen.

Der Sicherheitszuschlag wird aus einer Differenz eines maximalen Leistungsbedarfs und eines minimalen Leistungsbedarfs aller von dem betrachteten DSP unterstützten Codecs und einem Erhöhungsfaktor berechnet. Diese Berechnung ermöglicht es, den Sicherheitszuschlag individuell auf eine mögliche Änderung der Leistungsanforderung durch Codecwechsel im Rahmen der von dem DSP tatsächlich unterstützten Codecs zu optimieren. Dabei gibt die Differenz den größtmöglichen Leistungsbedarfssprung, der bei einem Wechsel von dem Codec mit dem geringsten Leistungsbedarf zu dem Codec mit dem größten Leistungsbedarf eintreten würde, an, während der Erhöhungsfaktor als ein Faktor zu verstehen ist, der angibt, wie viele solche größtmöglichen Leistungsbedarfssprünge gleichzeitig handhabbar sein sollen.

Besonders bevorzugt werden der Erhöhungsfaktor, die Leistungsbedarfswerte der unterstützten Codecs und das maximale Gesamtleistungsvermögen vorab für jeden DSP bestimmt. Die Leistungsbedarfswerte der unterstützten Codecs und das maximale Gesamtleistungsvermögen können als Konfigurationsdaten jedes DSP verstanden werden. Die Bestimmung dieser Konfigurationsdaten kann beispielsweise aus Datenblättern und/oder realen Messungen erfolgen. Die Bestimmung des Erhöhungsfaktors kann beispielsweise eine Festlegung per Konfiguration anhand von Erfahrungswerten und/oder Randbedingungen der Einsatzumgebung sein. Technisch kann die Einrichtung der Konfigurationsdaten beispielsweise, aber nicht nur, via Systemkonfiguration, z.B. Web BAsed Management, erfolgen.

In einer bevorzugten Weiterbildung der Erfindung wird die Kanalverwaltung durch eine zentrale Instanz und eine Mehrzahl von dezentralen Instanzen durchgeführt, wobei jede dezentrale Instanz einem DSP individuell zugeordnet ist. Unter einer Instanz kann im Sinne der Erfindung ein Teilprozess bzw. eine Subroutine eines Gesamtprozesses, also eine Software-Einheit, und/oder eine Hardware-Einheit verstanden werden. Die Aufteilung in eine zentrale Instanz und mehrere dezentrale Instanzen ermöglicht es, Verfahrensschritte, die mehrere DSPen betreffen, in einem übergeordneten Prozess durchzuführen, und Verfahrensschritte, die nur einen einzigen DSP betreffen, in einem individualisierten Prozess durchzuführen, wobei eine parallele Verarbeitung mehrerer individualisierter Prozesse, neben dem im Hintergrund ständig laufenden übergeordneten Prozess, möglich ist.

Besonders bevorzugt sind die dezentralen Instanzen eingerichtet und ausgelegt, um Leistungsdaten des ihr zugeordneten DSP an die zentrale Instanz weiterzugeben. Dadurch können beispielsweise die Konfigurationsdaten und der Sicherheitszuschlag eines individuellen DSP initialisiert werden sowie die momentane Auslastung dynamisch in der dezentralen Instanz bestimmt und der zentralen Instanz quasi in Echtzeit zur Verfügung gestellt werden, um dort für übergeordnete Lastausgleichsprozesse verwendet zu werden.

Besonders bevorzugt sind die dezentralen Instanzen durch die zentrale Instanz anforderbar. Dadurch können Prozesse der dezentralen Instanzen bei Bedarf von der zentralen Instanz angefordert werden. Anfragen, die etwa den Neuaufbau eines Kommunikationskanals betreffen, können von der zentralen Instanz aus vorverarbeitet werden, während zu konkreten Kanalbelegung und Neuberechnung der Auslastung die entsprechende dezentrale Instanz aufgerufen wird.

Vorzugsweise weist das Verfahren die durch eine zentrale Instanz durchzuführenden Schritte auf:

- Empfangen einer Kanalanforderung;
- Bestimmen von DSPen, die für eine Kanalneubelegung zur Verfügung stehen, als freie DSPen, auf der Grundlage einer ersten Beziehung für jeden DSP zwischen einer momentanen Auslastung, eines maximalen Gesamtleistungsvermögens und eines Leistungsbedarfs gegenwärtig an den DSP gerichteten Kanalneubelegungsanfragen; und
- falls die Bestimmung freier DSPen ergibt, dass kein DSP frei ist: Zurückweisen der Kanalanforderung,
- anderenfalls: Bestimmen desjenigen DSP, der unter allen freien DSPen eine geringste momentane Auslastung aufweist, als nominierten DSP, auf der Grundlage einer zweiten Beziehung für jeden freien DSP zwischen einer momentanen Auslastung, eines maximalen Gesamtleistungsvermögens und eines Leistungsbedarfs gegenwärtig an den DSP gerichteten Kanalneubelegungsanfragen, wobei jeweils der Leistungsbedarf einer Kanalneubelegungsanfrage vorzugsweise auf der Grundlage des größten Leistungsbedarfs unter allen von dem DSP unterstützten Codecs bestimmt wird, und Richten einer Kanalneubelegungsanfrage an eine dezentrale Instanz, die dem nominierten DSP zugeordnet ist.

Als eine Kanalanforderung wird im Sinne der Erfindung eine an die zentrale Instanz gerichtete Aufforderung, einen Kommunikationskanal aufzubauen, verstanden. Als eine Kanalneubelegungsanfrage wird im Sinne der Erfindung eine von der zentralen Instanz an eine dezentrale Instanz, einen neuen Kommunikationskanal aufzubauen, gerichtete Aufforderung verstanden.

Das Verfahren ist besonders geeignet für die Verwaltung einer Anfrage zur Belegung eines neuen Kanals. Die momentane Auslastung der DSPen kann dynamisch zur Verwaltung von Kanälen berücksichtigt werden. Wenn die erste Beziehung zur Bestimmung freier DSPen zusätzlich einen Sicherheitszuschlag aufweist, können Schwankungen im Leistungsvermögen und/oder in den Anforderungen, beispielsweise durch Änderungen im Codec in einer laufenden Kommunikation, dynamisch berücksichtigt werden.

In einer bevorzugten Weiterbildung weist das Verfahren die durch eine dezentrale Instanz durchzuführenden Schritte auf:

- Empfangen einer Kanalneubelegungsanfrage von der zentralen Instanz;
- Prüfen, ob ein Kanal des DSP frei ist, auf der Grundlage einer dritten Beziehung zwischen einer momentanen Auslastung, einem maximalen Gesamtleistungsvermögen und einem größten Leistungsbedarf aller von dem DSP unterstützten Codecs; und
- Bestätigen der Kanalneubelegungsanfrage, wenn ein Kanal frei ist, oder Zurückweisen der Kanalneubelegungsanfrage, wenn kein Kanal frei ist, an die zentrale Instanz.

Besonders bevorzugt weist die dritte Beziehung zum Prüfen einen Sicherheitszuschlag auf. Zusätzlich können dann, wenn ein Kanal frei ist, durch die dezentrale Instanz die folgenden Schritte durchgeführt werden:

- Neuberechnen der momentanen Auslastung unter Berücksichtigung des tatsächlichen Leistungsbedarfs für einen angeforderten Codec; und
- Melden der neu berechneten momentanen Auslastung an die zentrale Instanz.

Dadurch können die Leistungsdaten des nominierten DSP bei einer Kanalneubelegung quasi in Echtzeit der zentralen Instanz für weitere Verwaltungsschritte zur Verfügung gestellt werden. Die zentrale Instanz kann stets auf aktualisierte Leistungs- bzw. Auslastungsdaten zurückgreifen. So können Leistungsreserven des Systems besser ausgenutzt werden und kann die Effizienz und Leistungsfähigkeit des Systems gesteigert werden.

Die Erfindung ist nach einem weiteren Gesichtspunkt auch auf eine Vorrichtung zur Kanalverwaltung auf digitalen Signalprozessoren gerichtet, die eingerichtet und ausgelegt ist, das vorstehend beschriebene Verfahren durchzuführen. Insbesondere kann die Vorrichtung eingerichtet und ausgelegt sein, eine zentrale Instanz und mehrere dezentrale Instanzen zu verwirklichen. Es versteht sich, dass die Verwirklichung der Instanzen durch getrennte Hardwarekomponenten und/oder durch Computerprogrammkonstrukte auf ein und der selben oder verteilten Hardwarekomponenten verwirklichbar sein können.

Weitere Merkmale, Aufgaben, Vorteile und Einzelheiten der vorliegenden Erfindung werden aus der nachstehenden Beschreibung konkreter Ausführungsbeispiele und ihrer zeichnerischen Darstellung in den beigefügten Figuren noch deutlicher werden. Es versteht sich, dass Merkmale, Aufgaben, Vorteile und Einzelheiten einzelner Ausführungsbeispiele auf andere Ausführungsbeispiele übertragbar sind und auch im Zusammenhang mit den anderen Ausführungsbeispielen als offenbart gelten sollen, soweit dies nicht aus technischen oder naturgesetzlichen Gründen offensichtlich abwegig ist. Ausführungsbeispiele können miteinander kombiniert werden, und die Kombination kann ebenfalls als Ausführungsbeispiel der Erfindung verstanden werden.

Im Folgenden wird die Erfindung anhand bevorzugter Ausführungsbeispiele und mit Hilfe von Figuren näher beschrieben. Dabei

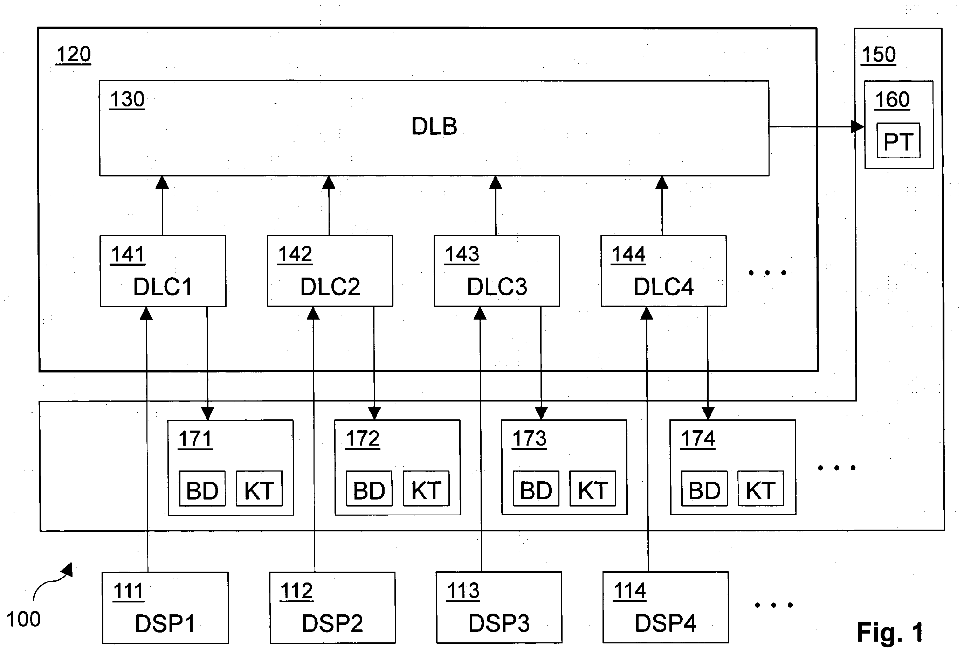

ist Fig. 1    eine schematische Darstellung eines Systems gemäß einem bevorzugten Ausführungsbeispiel;

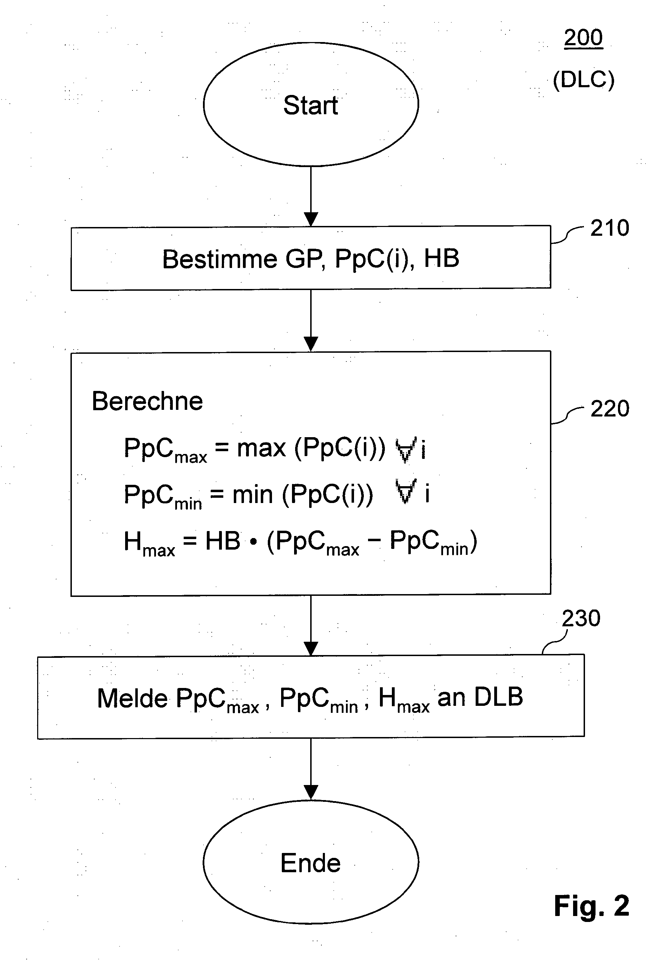

ist Fig. 2    eine schematische Darstellung eines Prozesses zur Bestimmung und Meldung von Leistungsdaten;

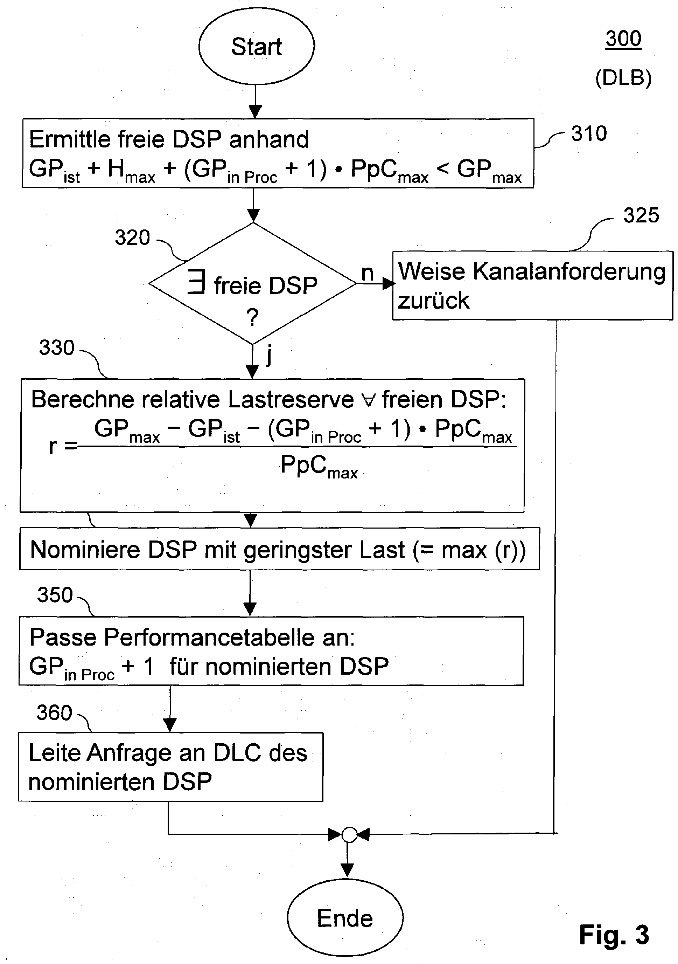

ist Fig. 3    eine schematische Darstellung eines zentralen Prozesses zur Verarbeitung einer Kanalanforderung;

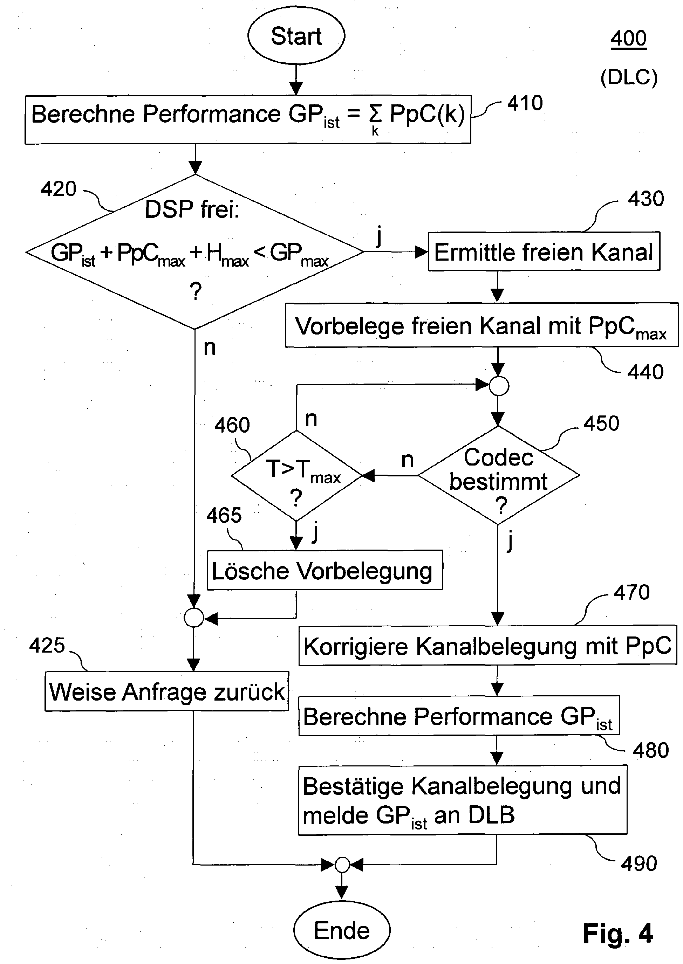

ist Fig. 4    eine schematische Darstellung eines individuellen Prozesses zur Verarbeitung einer Kanalneubelegungsanfrage;

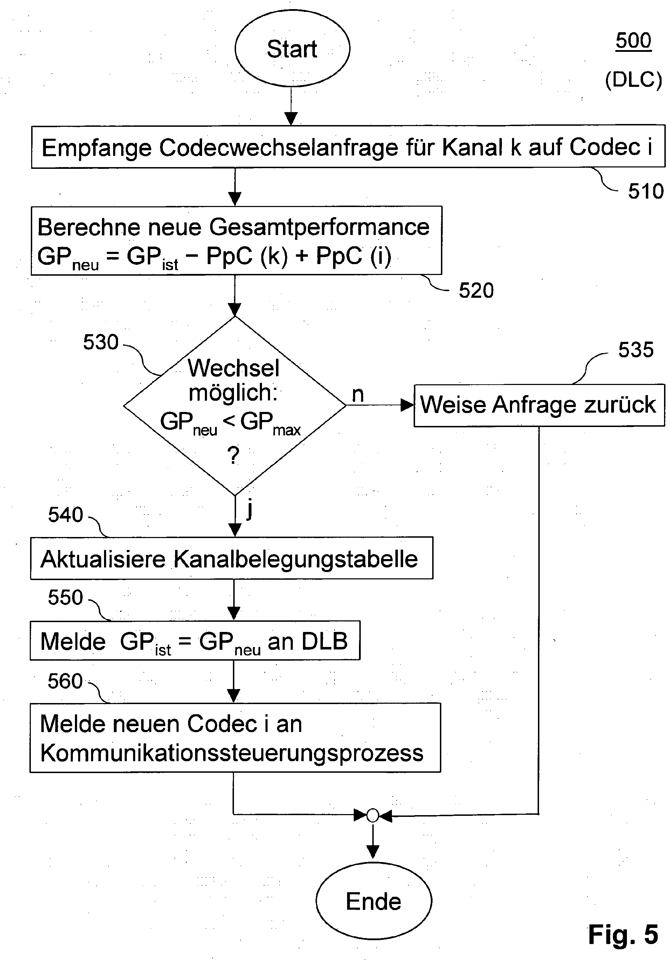

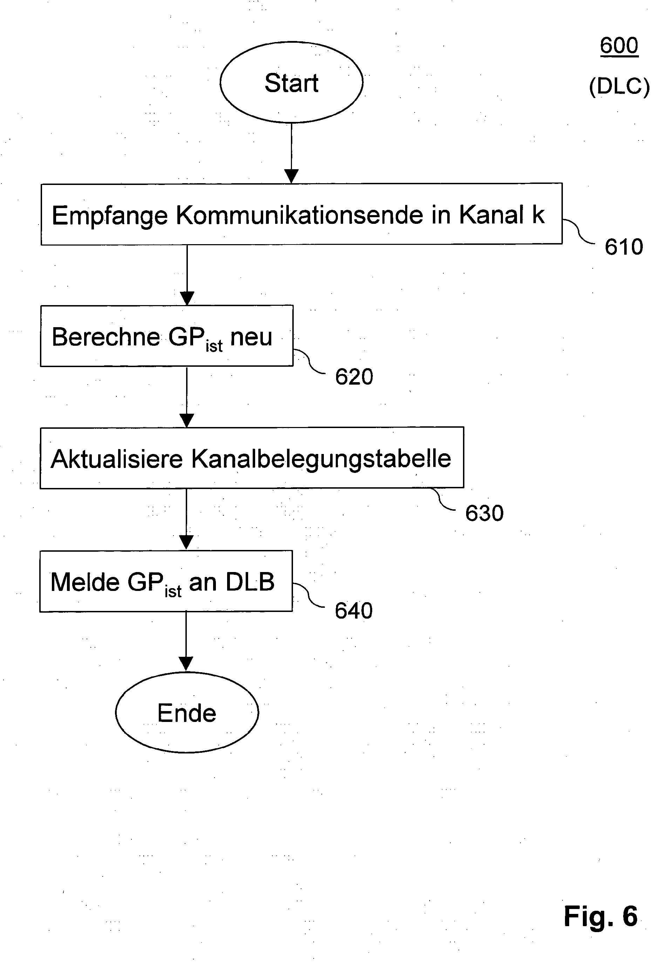

ist Fig. 5    eine schematische Darstellung eines Prozesses zur Verarbeitung eines Codecwechsels; und

ist Fig. 6    eine schematische Darstellung eines Prozesses zur Freigabe eines Kanals.

Die Figuren sind rein schematisch und nicht notwendigerweise maßstabsgetreu. Die zeichnerischen Darstellungen und Beschreibungen hiervon sind zur beispielhaften Veranschaulichung des Prinzips der Erfindung gedacht und sollen diese in keiner Weise einschränken.

<Grundlegender Aufbau>

Wie in Fig. 1 veranschaulicht, weist ein System 100 gemäß einem bevorzugten Ausführungsbeispiel der vorliegenden Erfindung vier digitale Signalprozessoren (nachstehend mit DSP abgekürzt) 111 (DSP1), 112 (DSP2), 113 (DSP3), 114 (DSP4), einen Host-Prozessor 120 und einen Speicher 150 auf. Ohne Beschränkung der Allgemeinheit ist in diesem Ausführungsbeispiel das System eine Gateway-Einrichtung in einem Telekommunikationsgerät und sind die digitalen Signalprozessoren 111-114, der Host-Prozessor 120 und der Speicher 150 auf der selben Platine untergebracht. Alternativ können die Komponenten auf unterschiedlichen Platinen untergebracht sein. Abweichend von dem Beispiel können der Host-Prozessor 120, der Speicher 150 und die digitalen Signalprozessoren 111-114 in verteilten Geräten implementiert sein. Insbesondere kann der Speicher 150 auf mehreren Platinen verteilt sein.

Zur Durchführung einer Kanalverwaltung von Sprachkommunikationskanälen (nachstehend kurz als Kanäle bezeichnet) auf den DSP 111-114 ist ein Host-Prozessor 120 vorgesehen. Der Host-Prozessor 120 weist einen zentralen Lastausgleichsprozess (nachstehend abgekürzt mit DLB oder DLB-Prozess für engl. "DSP Load Balancing process") 130 und für jeden im System vorhandenen DSP einen dedizierten DSP-Laststeuerungsprozess (nachstehend abgekürzt mit DLC bzw. DLC-Prozess für engl. "DSP Load Controller process") 141, 142, 143, 144 auf. Genauer gesagt, ist der DLC 141 (DLC 1) dem digitalen Signalprozessor 111 (DSP 1) zugeordnet, ist der DLC 142 (DLC 2) dem digitalen Signalprozessor 112 (DSP 2) zugeordnet, ist der DLC 143 (DLC 3) dem digitalen Signalprozessor 113 (DSP 3) zugeordnet, und ist der DLC 144 (DLC 4) dem digitalen Signalprozessor 114 (DSP 4) zugeordnet.

Es versteht sich, dass die Anordnung mit vier DSPen ganz und gar beispielhaft ist. In bevorzugten Abwandlungen können weniger oder mehr DSPen im System vorhanden sein. Im Extrem ist die Erfindung auch auf einen einzigen DSP anwendbar.

Der Speicher 150 weist einen DLB-Speicherbereich 160 und für jeden DLC (DLC1-DCL4) einen dedizierten DLC-Speicherbereich 171-174 auf. In dem DLB-Speicherbereich 160 ist eine Performance-Tabelle PT angelegt, die einen Auslastungszustand des Systems aus der Sicht des DLB-Prozesses 130 beschreibt. In jedem DLC-Speicherbereich 171-174 sind ein Bereich für Basisdaten BD und eine Kanalbelegungstabelle KT angelegt.

Genauer gesagt, sind Basisdaten BD und eine Kanalbelegungstabelle KT für den DSP 111 (DSP1) im dedizierten Speicherbereich 171 hinterlegt, sind Basisdaten BD und eine Kanalbelegungstabelle KT für den DSP 112 (DSP2) im dedizierten Speicherbereich 172 hinterlegt, sind Basisdaten BD und eine Kanalbelegungstabelle KT für den DSP 113 (DSP3) im dedizierten Speicherbereich 173 hinterlegt, und sind Basisdaten BD und eine Kanalbelegungstabelle KT für den DSP 114 (DSP4) im dedizierten Speicherbereich 174 hinterlegt. Dabei beschreiben die Basisdaten BD eine Grundkonfiguration des durch den jeweiligen DLC gesteuerten DSP und beschreiben die Kanalbelegungstabellen KT einen Kanalbelegungszustand des jeweiligen DSP.

\<Anmeldung eines DSP\>

In Fig. 2 ist ein Anmeldeprozess für einen digitalen Signalprozessor, beispielsweise einen der digitalen Signalprozessoren 111-114 (Fig. 1), wie er durch einen DSP-Laststeuerungsprozess (DLC), insbesondere jeden der DLCs 141-144 in Fig. 1, zur Anmeldung eines DSP an dem zentralen Lastausgleichsprozess DLB 130 von Fig. 1 gemäß dem bevorzugten Ausführungsbeispiel der vorliegenden Erfindung schematisch dargestellt.

Gemäß der Darstellung in Fig. 2 weist der Anmeldeprozess 200 einen Bestimmungsschritt 210, einen Berechnungsschritt 220 und einen Meldeschritt 230 auf.

In dem Bestimmungsschritt 210 werden eine Gesamtperformance-Wertzahl GP des jeweiligen DSP, ein Performancebedarf $PpC(i)$ (i=1...n) für jeden von n von dem DSP unterstützten Codecs sowie ein Hysteresebedarf HB des DSP bestimmt.

Beispielsweise weist der erste DSP 111 (DSP1) von Fig. 1 eine Gesamtperformance-Wertzahl $GP_{max}=100$ und einen Hysteresebedarf HB=2 auf und unterstützt die Codecs G.711, G.722, G.723, G.729 und T.38. Es sei ferner vorausgesetzt, dass die genannten Codecs einen Performancebedarf PpC gemäß nachstehender Tabelle 1 aufweisen:

Tabelle 1: Performancebedarf verschiedener Codecs

| i | Codec | PpC |
|---|-------|-----|
| 1 | G.711 | 8 |
| 2 | G.722 | 10 |
| 3 | G.723 | 14 |
| 4 | G.729 | 20 |
| 5 | T.38 | 18 |

Die Werte für $GP_{max}$ sowie die unterstützten Codecs werden aus Datenblättern und/oder realen Messungen bestimmt und sind als Basisdaten BD im jeweiligen dedizierten Speicherbereich 171, ..., 174 abgelegt. Der Hysteresebedarf HB wird beispielsweise per Konfiguration festgelegt.

In dem Berechnungsschritt 220 werden ein maximaler und ein minimaler Performancebedarf $PpC_{max}$, $PpC_{min}$ und eine maximale Hysterese $H_{max}$ des DSP 111 (DSP1) berechnet, wobei die in Schritt 210 bestimmten Werte zur Berechnung herangezogen werden.

Demnach werden für den DSP 111 (DSP1) der maximale Performancebedarf zu

$$PpC_{max1} = MAX(PpC(i)) \ (i=1...5)$$

$$= MAX(PpC(G.711), PpC(G.722), PpC(G.273), PpC(G.729), PpC(T.38))$$

$$= MAX(8, 10, 14, 20, 18)$$

$$= 20 \hspace{4cm} \text{(Formel 1),}$$

der minimale Performancebedarf zu

$$PpC_{min1} = MIN(PpC(i)) \ (i=1...5)$$

$$= MIN(PpC(G.711), PpC(G.722), PpC(G.273), PpC(G.729), PpC(T.38))$$

$$= MIN(8, 10, 14, 20, 18)$$

$$= 8 \hspace{4cm} \text{(Formel 2)}$$

und die maximale Hysterese zu

$$H_{max1} = (PpC_{max1} - PpC_{min1}) * HB$$

$$= (20 - 8) * 2$$

$$= 24 \hspace{4cm} \text{(Formel 3)}$$

berechnet.

In dem Meldeschritt 230 werden die drei Parameter $GP_{max1}=100$, $PpC_{max1}=20$ und $H_{max1}=24$ für den DSP 111 (DSP1) an den DLB gemeldet. Im Sinne der Erfindung ist die maximale Hysterese $H_{max}$ ein Sicherheitszuschlag und ist der Hysteresebedarf HB ein Erhöhungsfaktor, ist der Performancebedarf PpC ein Leistungsbedarf eines Codecs und ist die Gesamtperformance-Wertzahl $GP_{max}$ ein maximales Gesamtleistungsvermögen eines DSP.

Der Anmeldeprozess 200 wird in dem vorliegenden Ausführungsbeispiel in jedem der DLC 141-144 für den jeweils zugeordneten DSP 111-114 durchgeführt. So melden beispielsweise der DLC 142 (DLC2) für den DSP 112 (DSP2) die Werte $GP_2=200$, $PpC_{max2}=25$ und $H_{max2}=30$, der DLC 143 (DLC3) für den DSP 113 (DSP3) die Werte $GP3=200$, $PpC_{max3}=25$ und $H_{max3}=30$, und der DLC 144 (DLC4) für den DSP 114 (DSP4) die Werte $GP_4=120$, $PpC_{max4}=10$ und $H_{max4}=16$ an den DLB 130.

Die gemeldeten Werte werden in der Performancetabelle 160 (Fig. 1) PT im DLB-Speicherbereich 160 des im Speicher 150 abgelegt. Nach der Anmeldung aller DSP 111-114, beispielsweise nach Hochlaufen des Systems weist die Performancetabelle beispielsweise folgende Werte auf:

Tabelle 2: Performancetabelle nach Hochlauf

| DSP | $GP_{max}$ | $GP_{ist}$ | $GP_{inProc}$ | $PpC_{max}$ | $H_{max}$ |
|---|---|---|---|---|---|
| 1 | 100 | 0 | 0 | 20 | 24 |
| 2 | 200 | 0 | 0 | 25 | 30 |
| 3 | 200 | 0 | 0 | 25 | 30 |
| 4 | 120 | 0 | 0 | 10 | 16 |

Der maximale Performancebedarf $PpC_{max}$ wird vorzugsweise ebenfalls in den Basisdaten BD des jeweiligen dedizierten Speicherbereichs 171, ..., 174 des Speichers 150 zur weiteren Verwendung abgelegt und dort von verschiedenen Prozessen des jeweiligen DLC 141, ..., 144 in Zugriff genommen. Alternativ ist es auch möglich, dass die Prozesse der DLC 141-144 auf die Performancetabelle PT im DLB-Speicherbereich 160 zugreifen; das würde Speicherplatz einsparen, kann aber zusätzlichen Aufwand in der Datenverwaltung, -zuordnung und -verarbeitung erfordern.

<Kanalanforderung im DLB>

Für die weitere Betrachtung wird davon ausgegangen, dass das System bereits einige Zeit läuft und einige Kanäle vermittelt werden. Beispielsweise wird der Zustand des Systems zu einem betrachteten Zeitpunkt durch die nachstehende Performancetabelle beschrieben:

Tabelle 3: Performancetabelle zu einem Betriebszeitpunkt

| DSP | $GP_{max}$ | $GP_{ist}$ | $GP_{inProc}$ | $PpC_{max}$ | $H_{max}$ |
|---|---|---|---|---|---|
| 1 | 100 | **90** | **0** | 20 | 24 |
| 2 | 200 | **120** | **0** | 25 | 30 |
| 3 | 200 | **80** | **1** | 25 | 30 |
| 4 | 120 | **70** | **2** | 10 | 16 |

In Tabelle 3 wie auch allen weiten Tabellen sind Werte, die sich gegenüber der jeweils nächstälteren Tabelle geändert haben, hervorgehoben.

Gemäß Tabelle 3 wickelt somit im betrachteten Zeitpunkt DSP1 (111 in Fig. 1) Kanäle mit einer Gesamtperformance ($GP_{ist}$) von 90 ab, wickelt DSP2 (112 in Fig. 1) Kanäle mit einer Gesamtperformance von 120 ab, wickelt DSP3 (113 in Fig. 1) Kanäle mit einer Gesamtperformance von 80 ab, und wickelt DSP4 (114 in Fig. 1) Kanäle mit einer Gesamtperformance von 70 ab. Gleichzeitig bearbeitet der Laststeuerungsprozess DLC des DSP 3 gegenwärtig eine Anfrage zur Neubelegung eines Kanals ($GP_{inProc}$) und bearbeitet der DLC des DSP 4 gegenwärtig zwei solche Anfragen.

Fig. 3 veranschaulicht in Form eines Ablaufdiagramms einen im DLB durchgeführten Prozess 300 zur Bearbeitung einer neuen Kanalanforderung.

Eine solche Kanalanforderung wird zunächst an den DLB-Prozess geleitet. Demzufolge ist der Prozess 300 eine Unterroutine, die im laufenden DLB-Prozess aufgerufen wird, wenn eine neue Kanalanforderung an das System gestellt wird.

Nach Beginn des Prozesses 300 werden in einem Schritt 310 freie DSPen ermittelt. Als freier DSP ist dabei ein DSP zu verstehen, dessen gegenwärtig gemeldete und in der Performancetabelle abgelegte Gesamtperformance unter Berücksichtigung der maximalen Hysterese und der gegenwärtig bearbeiteten und der neu hinzugekommen Kanalanforderungen sowie des jeweiligen Performancebedarf geringer ist als die maximale Performance des jeweiligen DSP. Ein DSP gilt in diesem Verfahrensschritt somit als frei, wenn die Bedingung:

$$GP_{ist} + H_{max} + (GP_{inProc} + 1) * PpC_{max} < GP_{max} \qquad \text{(Formel 4)}$$

erfüllt ist. Die Berechnung in Schritt 310 kann in folgender Tabelle veranschaulicht werden:

Tabelle 4: Berechnung freier DSPen

| DSP | $GP_{ist} + H_{max} + (GP_{inProc} + 1) * PpC_{max}$ | Erg. | $GP_{max}$ | Erg. < $GP_{max}$ |
|---|---|---|---|---|
| 1 | 90 + 24 + (0 + 1) * 20 | 134 | 100 | false |
| 2 | 120 + 30 + (0 + 1) * 25 | 175 | 200 | true |
| 3 | 80 + 30 + (1 + 1) * 25 | 160 | 200 | true |
| 4 | 70 + 16 + (2 + 1) * 10 | 116 | 120 | true |

In Schritt 320 wird beurteilt, ob es unter den vorhandenen DSPen wenigstens einen freien DSP gibt. Dies ist der Fall, wenn wenigstens eines der Berechnungsergebnisse true (wahr) ist. Falls die Beurteilung in Schritt 320 negativ ist (d.h., kein DSP ist frei), verzweigt der Prozess 300 zu Schritt 325, anderenfalls zu Schritt 330.

In Schritt 325, der auf eine negative Beurteilung in Schritt 320 folgt, wird die Kanalanforderung zurückgewiesen, und danach endet der Prozess. Unter einem Enden des Prozesses ist im Allgemeinen ein Rücksprung in einen aufrufenden Prozess, hier insbesondere in den dem Prozess 300 übergeordneten DLB-Prozess, zu verstehen.

In Schritt 330, der auf eine positive Beurteilung in Schritt 320 folgt, wird für alle in Schritt 310 als frei beurteilten DLP eine relative Lastreserve r nach der Beziehung

$$r = (GP_{max} - GP_{ist} - (GP_{inProc} + 1) * PpC_{max}) / PpC_{max} \hspace{2cm} \text{(Formel 4)}$$

berechnet. Die Berechnung in Schritt 330 kann in folgender Tabelle veranschaulicht werden:

Tabelle 5: Berechnung der relativen Lastreserve r

| DSP | $(GP_{max} - GP_{ist} - (GP_{inProc} + 1) * PpC_{max}) / PpC_{max}$ | Erg. = r |
|---|---|---|
| 1 | keine Berechnung | n.n. |
| 2 | (200 - 120 - (0 + 1) * 25) / 25 | 2,2 |
| 3 | (200 - 80 - (1 + 1) * 25) / 25 | 2,8 |
| 4 | (120 - 70 (2 + 1) * 10) / 10 | 2 |

In dem anschließenden Schritt 340 wird derjenige DSP bestimmt, der unter allen freien DSP die geringste Last aufweist. Hierzu wird die in Schritt 330 berechnete Lastreserve herangezogen. Die in Schritt 330 berechnete Lastreserve (es ist eine relative Lastreserve, die auf die maximale Last der von dem jeweiligen DSP unterstützten Codecs bezogen ist) ist ein Maß für die derzeitige Last (oder Auslastung) des jeweiligen DSP. Demnach wird im vorliegenden Beispiel DSP3 mit einer Lastreserve von 2,8 als der DSP mit der geringsten Last bestimmt.

In dem anschließenden Schritt 350 wird die Performancetabelle aktualisiert, indem der Wert $GP_{InProc}$ für den in Schritt 340 bestimmten DSP mit der geringsten gegenwärtigen Last um "1" erhöht wird. D.h., der Wert $GP_{InProc}$ wird für den DSP3 um "1" inkrementiert. Nach Schritt 350 sieht die Performancetabelle wie folgt aus:

Tabelle 6: Performancetabelle nach Aktualisierung für Kanalanforderung

| DSP | $GP_{max}$ | $GP_{ist}$ | $GP_{inProc}$ | $PpC_{max}$ | $H_{max}$ |
|---|---|---|---|---|---|
| 1 | 100 | 90 | 0 | 20 | 24 |
| 2 | 200 | 120 | 0 | 25 | 30 |
| 3 | 200 | 80 | 2 | 25 | 30 |
| 4 | 120 | 70 | 2 | 10 | 16 |

Wie in Tabelle 6 ersichtlich, hat sich der Wert $GP_{InProc}$ für den DSP3 von gegenüber Tabelle 3 von "1" auf "2" erhöht.

In dem anschließenden Schritt 360 wird eine Kanalneubelegungsanfrage an den in Schritt 340 bestimmten DSP mit der geringsten Last bzw. der größten relativen Lastreserve r übermittelt. Im vorliegenden Beispiel wird demnach die Anfrage an DSP3 (r = 2,8) übermittelt.

Danach endet dieser Prozess bzw. springt zum aufrufenden Prozess zurück.

<Kanalneubelegungsanfrage im DLC>

Fig. 4 veranschaulicht in Form eines Ablaufdiagramms einen im DLC-Prozess durchgeführten Prozess 400 zur Bearbeitung einer Aufforderung bzw. Anfrage zur Belegung eines neuen Kanals (Aufbau eines Kommunikationskanals).

Der Prozess 400 ist eine Unterroutine, die im laufenden DLC-Prozess eines DLB aufgerufen wird, wenn durch den DLB-Prozess bzw. dessen Kanalanforderungsprozess 300 eine Kanalneubelegungsanfrage an diesen DLB weitergeleitet wird (vgl. Schritt 360 in Fig. 3). Der Prozess 400 kann mehrfach, also für mehrere Anfragen, parallel aufgerufen werden.

Nach Beginn bzw. Aufruf des Prozesses 400 wird in Schritt 410 zunächst die tatsächliche gegenwärtige Performance $GP_{ist}$ des zugehörigen DLB berechnet. Diese Berechnung kann durch die Beziehung

$$GP_{ist} = \sum_{k=1}^{K} PpC(k) \qquad \text{(Formel 5)}$$

ausgedrückt werden, wobei k eine Laufvariable für die Summierung ist und K die Anzahl aller (belegten und freien) Kanäle im DSP ist.

Im gegenwärtigen Beispiel wurde durch den DLB (130 in Fig. 1) in dem in Fig. 3 veranschaulichten Prozess 300 der DSP3 als der DSP mit der geringsten Last ermittelt und daher die Kanalneubelegungsanfrage an den DSP3 weitergeleitet. für den DSP3 sei die gegenwärtige Kanalbelegung durch folgende Tabelle ausgedrückt:

Tabelle 7: Kanalbelegung bei Aufruf des Prozesses 400

| Kanal k | 1 | 2 | 3 | ... |
|---------|-------|-----|-------|-----|
| Codec | G.723 | (-) | G.711 | ... |
| PpC | 14 | 0 | 8 | ... |

Es sei angemerkt, dass die Kanalbelegungstabelle KT beide Zeilen "Codec" und "PpC" von Tabelle 7 aufweisen kann, aber nur eine der genannten Zeilen aufweisen muss, denn sowohl durch die Angabe des Codecs selbst als auch durch die Angabe der zugehörigen Performance PpC ist die Belegung eines Kanals eindeutig definiert. Es kann daher in der Kanalbelegungstabelle KT für jeden Kanal nur eine Kennung für den Codec abgelegt werden, wobei die Verknüpfung zwischen den Codecs und dem zugehörigen Performance-Wert in den Basisdaten BD des jeweiligen Speicherbereichs 171, ..., 174 (Fig. 1) gegeben ist. Alternativ kann bei Belegung eines Kanals der Performance-Wert des vereinbarten Codec aus den Basisdaten BD geholt und in der Kanalbelegungstabelle KT abgelegt werden. Die Tabelle 7 wie auch weiter unten angegebene Tabellen zur Kanalbelegung dienen daher in erster Linie der Anschaulichtkeit und der Nachvollziehbarkeit des Zahlenbeispiels. Die Performance PpC jedes Kanals ist ein tatsächlicher Leistungsbedarf des Kanals im Sinne der Erfindung.

Die Formel 5, die in Schritt 410 zur Anwendung kommt, greift auf die Werte in Tabelle 7 zurück.

In dem anschließenden Schritt 420 wird beurteilt, ob der DSP tatsächlich frei ist. Die Beurteilung in Schritt 420 ist positiv, wenn die Beziehung

$$GP_{ist} + PpC_{max} + H_{max} < GP_{max} \qquad \text{(Formel 6)}$$

erfüllt ist.

Falls die Beurteilung in Schritt 420 negativ ist, d.h., wenn beurteilt wird, dass der DSP nicht frei ist, verzweigt der Prozess zu Schritt 425, anderenfalls zu Schritt 430.

In Schritt 425, der auf eine negative Beurteilung in Schritt 420 folgt, wird die Kanalanforderung zurückgewiesen, und der Prozess 400 endet.

Es ist anzumerken, dass die Überprüfung durch Schritt 420 (einschließlich der Berechnung in Schritt 410) zu Beginn des Prozesses 400 durchgeführt wird, auch wenn in dem DLB-Kanalanforderungsprozess 300 (Fig. 3) der DSP als frei ermittelt wurde. Der DLB-Kanalanforderungsprozess 300 (Fig. 3) greift auf die in der Performancetabelle bereits gemeldeten Daten zu. Es ist aber möglich, dass zwischenzeitlich eine Codec-Umschaltung in einem oder mehreren Kanälen des DSP erfolgte, die noch nicht an den DLB-Prozess gemeldet wurde. Daher kann sich der tatsächliche Performance-Wert $GP_{ist}$ geändert (erhöht) haben, wodurch der DSP nicht mehr frei ist. Deshalb muss es auch auf dieser Ebene möglich sein, eine Kananeubelegungsanfrage zurückzuweisen.

In Schritt 430, der auf eine positive Beurteilung in Schritt 420 folgt, wird ein freier Kanal ermittelt. Dies kann jeder beliebige freie Kanal sein; wichtig ist nur, dass der Kanal in der Kanalbelegungstabelle eindeutig identifizierbar ist. Der in Schritt 430 ermittelte freie Kanal wird nachstehend als nominierter Kanal bezeichnet. In dem vorliegenden Zahlenbeispiel wird gemäß Tabelle 7 der Kanal Nr. 2 als frei ermittelt und nominiert.

Im anschließenden Schritt 440 wird der in Schritt 430 nominierte Kanal zunächst mit dem maximalen Performance-Wert $PpC_{max}$ vorbelegt. Für das vorliegende Zahlenbeispiel ergibt sich $PpC_{max}$ für den angeforderten DSP3 aus der Performancetabelle PT (Tabelle 3) oder aus den Basisdaten BP für den DSP 3. Hiernach sieht die Kanalbelegung so aus, wie es in nachstehender Tabelle angegeben ist:

Tabelle 8: Kanalbelegung nach Vorbelegung

| Kanal k | 1 | 2 | 3 | ... |
|---------|------|-----------------|-------|-----|
| Codec | G.723 | $PpC_{max}$ | G.711 | ... |
| PpC | 14 | **20** | 8 | ... |

Wie aus Tabelle 8 ersichtlich, wurde der zuvor freie Kanal 2 durch den maximalen Performance-Wert $PpC_{max}$ (= 20) vorbelegt.

Im anschließenden Schritt 450 wird geprüft, ob der Codec für die Kanalanforderung bereits bestimmt ist. Dies erfolgt durch einen Empfang von Partnerdaten, also einer Gegenstelle des gewünschten Kommunikationskanals. Falls die Prüfung in Schritt 450 negativ ist, d.h., ein Codec für die Kanalanforderung noch nicht empfangen wurde, verzweigt der Prozess 400 zu Schritt 460, anderenfalls zu Schritt 470.

In Schritt 460, der auf eine negative Prüfung in Schritt 450 folgt, wird geprüft, ob eine maximale Wartezeit $T_{max}$ verstrichen ist. Die Definition einer maximalen Wartezeit $T_{max}$ ist sinnvoll, um eine Endlosschleife, die zu einer dauerhaften Vorbelegung von Kanälen für obsolet gewordene Kanalanforderungen führen könnte, zu verhindern.

Falls die Prüfung in Schritt 460 negativ ist, d.h., die maximale Wartezeit $T_{max}$ noch nicht verstrichen ist, springt der Prozess 400 zurück zur Prüfung in Schritt 450, um erneut zu prüfen, ob der Codec mittlerweile bestimmt ist.

Falls die Prüfung in Schritt 460 positiv ist, d.h., die maximale Wartezeit $T_{max}$ verstrichen ist, verzweigt der Prozess 400 zu Schritt 465, um die Vorbelegung des nominierten Kanals nach Ablauf der maximalen Wartezeit $T_{max}$ zu löschen. Mit anderen Worten, in Schritt 465, der erreicht wird, wenn die maximale Wartezeit $T_{max}$ verstrichen ist, wird in der Kanalbelegungstabelle KT der Eintrag des Codecs für den nominierte Kanal gelöscht bzw. der Performance-Wert PpC für den nominierten Kanal auf den Wert "0" gesetzt. Danach springt der Prozess 400 zu Schritt 425, um die Kanalneubelegungsanfrage zurückzuweisen, und der Prozess 400 endet.

In Schritt 470, der auf eine positive Prüfung in Schritt 450 folgt, wird die Kanalbelegung für den nominierten Kanal korrigiert. D.h., in die Kanalbelegungstabelle KT wird für den nominierten Kanal die Kennung für den bestimmten Codec und/oder der Performance-Wert PpC für den bestimmten Codec hinterlegt. Für das vorliegende Zahlenbeispiel werde angenommen, dass der bestimmte Codec G.723 sein soll. Daher sieht die Kanalbelegung nach Schritt 470 so aus, wie es in nachstehender Tabelle angegeben ist:

Tabelle 9: Kanalbelegung nach Korrektur

| Kanal k | 1 | 2 | 3 | ... |
|---------|------|-----------|-------|-----|
| Codec | G.723 | **G.723** | G.711 | ... |
| PpC | 14 | **14** | 8 | ... |

Wie aus Tabelle 9 ersichtlich, wurde der zuvor mit $PpC_{max}$ = 20 vorbelegte Kanal 2 nun durch Codec G.723 mit einem Performance-Wert PpC = 14 belegt.

In dem anschließenden Schritt 480 wird der nun zutreffende Gesamtperformance-Wert **$GP_{ist}$** des DLB (DLB3 im vorliegenden Zahlenbeispiel) nach vorstehender Formel 6 berechnet. Danach wird in Schritt 490 die Kanalbelegung an den DLB-Prozess bestätigt und das in Schritt 480 berechnete $GP_{ist}$ an den DLB-Prozess gemeldet. Danach endet der Prozess 400.

Es ist darauf hinzuweisen, dass bei Zurückweisung der Kanalanforderung in Schritt 425 eine Neuberechnung und Meldung des tatsächlichen $GP_{ist}$ unterbleibt, da eine Änderung der Gesamtperformance durch einen anderen Vorgang in einem entsprechenden Prozess berechnet und gemeldet werden kann.

Obschon in der Figur nicht näher dargestellt, wird nach jedem Rücksprung des DLC-Prozesses der Wert $GP_{inProc}$ in der Performancetabelle PT für den gerade aufgerufenen DLB durch den DLB-Prozess um den Wert "1" erniedrigt, da die Bearbeitung für diese Kanalneubelegungsanfrage in dem DLC-Prozess abgeschlossen ist. Wurde die Kanalneubelegungsanfrage durch den DLC-Prozess bestätigt, ist diese Kanalanforderung auch im DLB-Prozess abgeschlossen. Wurde die Kanalneubelegungsanfrage dagegen zurückgewiesen, wird vorzugsweise der DLB-Kanalanforderungsprozess 300 (Fig. 3) erneut aufgerufen. Alternativ kann, ggf. nach einer vorbestimmten Anzahl von Zurückweisungen durch DLC-Prozesse, die Kanalanforderung durch den DLB-Prozess endgültig zurückgewiesen werden. Es ist darauf hinzuweisen, dass die Begriffe der Kanalanforderung und der Kanalneubelegungsanfrage nur zur Unterscheidung der Bearbeitungsebene voneinander unterschieden werden. Eine Kanalanforderung an den zentralen DLB-Prozess wird als Kanalneubelegungsanfrage an einen dezentralen DLC-Prozess konkretisiert, und eine in dem dezentralen DLC-Prozess abgearbeitete Kanalneubelegungsanfrage betrifft eine bestimmte Kanalanforderung, die an den zentralen DLB-Prozess gerichtet worden war.

Der an den DLB-Prozess gemeldete, neue Wert für $GP_{ist}$ des jeweiligen DLB wird im DLB-Prozess an die Stelle des alten Werts geschrieben. Somit erhält im vorliegenden Zahlenbeispiel die Performance-Tabelle folgenden Inhalt:

Tabelle 10: Performancetabelle nach Kanalbestätigung

| DSP | $GP_{max}$ | $GP_{ist}$ | $GP_{inProc}$ | $PpC_{max}$ | $H_{max}$ |
|---|---|---|---|---|---|
| 1 | 100 | 90 | 0 | 20 | 24 |
| 2 | 200 | 120 | 0 | 25 | 30 |
| 3 | 200 | **94** | **1** | 25 | 30 |
| 4 | 120 | 70 | 2 | 10 | 16 |

<Codecwechsel im DLC>

Fig. 5 veranschaulicht in Form eines Ablaufdiagramms einen im DLC-Prozess durchgeführten Prozess 500 für die Verarbeitung einer Anfrage zum Codecwechsel in einem DSP-Kanal. Für das Zahlenbeispiel sei angenommen, dass DSP3 betroffen ist und ein Kommunikationspartner der über den Kanal 3 durchgeführten Kommunikation einen Codecwechsel von G.711 auf G.729 wünscht.

Nach Start bzw. Aufruf des Prozesses 500 wird in Schritt 510 eine Anfrage empfangen, die einen Wechsel für einen Kanal k (hier: k = 3) von einem bisherigen Codec auf einen Codec i betrifft.

In dem anschließenden Schritt 520 eine neue Gesamtperformance des betroffenen DSP unter Berücksichtigung des neuen Codec berechnet. Mit den Werten für das vorliegende Zahlenbeispiel (DSP3) wird diese Berechnung durch die Beziehung

$$
\begin{aligned}
GP_{neu} \quad &= \quad GP_{ist} - PpC(k) + PpC(i) \\
&= \quad GP_{ist} - PpC(G.711) + PpC(G.729) \\
&= \quad 94 - 8 + 20 \\
&= \quad 106 \qquad\qquad\qquad\qquad\qquad\qquad\text{(Formel 7)}
\end{aligned}
$$

ausgedrückt.

Im anschließenden Schritt 530 wird beurteilt, ob ein Kanalwechsel möglich ist. Diese Beurteilung ist positiv, wenn die Beziehung

$$
GP_{neu} \quad < \quad GP_{max} \qquad\qquad\qquad\qquad\qquad\qquad\text{(Formel 8)}
$$

wahr (true) ist.

Falls die Beurteilung in Schritt 530 negativ ist, verzweigt der Prozess 500 zu Schritt 535, anderenfalls zu Schritt 540.

In Schritt 535, der auf eine negative Beurteilung in Schritt 530 folgt, wird der Codecwechsel zurückgewiesen, und der Prozess 500 endet.

Für das Zahlenbeispiel (DSP3) ist der neue Wert für die Gesamtperformance $GP_{neu}=106$ kleiner als die maximale Gesamtperformance $GP_{max}=200$, die Beurteilung in Schritt 530 ist daher positiv.

In Schritt 540, der auf eine positive Beurteilung in Schritt 530 folgt, wird die Kanalbelegungstabelle für den betroffenen DSP aktualisiert. D.h., der Wert für den Codec bzw. dessen Performancebedarf wird in der Kanalbelegungstabelle KT mit dem neuen Codec bzw. dessen Performancebedarf überschrieben. Die Kanalbelegung wird danach durch folgende Tabelle ausgedrückt:

Tabelle 11: Kanalbelegung nach Codecwechsel

| Kanal k | 1 | 2 | 3 | ... |
|---------|-----|-----|-------|-----|
| Codec | G.723 | G.723 | **G.729** | ... |
| PpC | 14 | 14 | **20** | ... |

Wie in Tabelle 11 ersichtlich, wurden die Werte für Kanal 3, die zuvor durch die Werte für G.711 belegt waren (vgl. Tabelle 9) durch die Werte für G.729 überschrieben. Falls die Gesamtperformance in den Basisdaten BD des DSP enthalten ist, wird dort der Wert $GP_{ist}$ durch den neuen Wert $GP_{neu}$ überschrieben.

Danach wird in Schritt 550 der neue Wert für $GP_{ist} = GP_{neu}$ an den DLB-Prozess gemeldet. Im DLB-Prozess wird, obschon in der Figur nicht näher dargestellt, die Performancetabelle mit dem neuen $GP_{ist}$ für den meldenden DSP aktualisiert, wie es der nachstehenden Tabelle zu entnehmen ist:

Tabelle 13: Performancetabelle nach Codecwechsel

| DSP | $GP_{max}$ | $GP_{ist}$ | $GP_{inProc}$ | $PpC_{max}$ | $H_{max}$ |
|-----|-----------|-----------|---------------|-------------|-----------|
| 1 | 100 | 90 | 0 | 20 | 24 |
| 2 | 200 | 120 | 0 | 25 | 30 |
| 3 | 200 | **114** | 1 | 25 | 30 |
| 4 | 120 | 70 | 2 | 10 | 16 |

Im anschließenden Schritt 560 wird der neue Codec an einen nicht näher dargestellten Kommunikationssteuerungsprozess. Danach endet der Prozess 500.

Durch den oben angedeuteten Kommunikationssteuerungsprozess wird die Kommunikation auf dem Kanal k auf den neuen Codec i umgestellt. Die hierfür erforderlichen Prozesse wie etwa Handshake- und Signalinterpreterprozesse sind an sich bekannt und müssen hier nicht weiter beschrieben werden.

Es ist anzumerken, dass der Prozess 500 im Wesentlichen in dem dedizierten DLC-Prozess 141, ..., 144 (vgl. Fig. 1) und nicht im zentralen DLB-Prozess 130 abläuft. Durch diese dezentrale Verarbeitung werden nur dort prozessuale Ressourcen eingesetzt, wo sie gebraucht werden; die DLC-Prozesse, die anderen DSPen zugeordnet sind, und der zentrale DLB-Prozess 130 werden - abgesehen von der zentralen Aktualisierung der Performancetabelle - von Prozessen, die nur einen bestimmten DSP betreffen, nicht berührt.

<Kanalfreigabe im DSC>

Fig. 6 veranschaulicht in Form eines Ablaufdiagramms einen Prozess 600 zur Freigabe eines Kanals. Der Prozess 600 ist Bestandteil des DLC-Prozesses und wird für einen bestimmten DSP dann durchgeführt, wenn eine über einen Kanal k des DSP geführte Kommunikation geendet hat. In diesem Fall sendet ein nicht näher dargestellter Kommunikationssteuerungsprozess eine Meldung über das Ende der Kommunikation in Kanal k an den DLC-Prozess des betroffenen DSP. Die Meldung kann auch über den DLB-Prozess empfangen und an den DLC-Prozess weitergeleitet werden.

Im vorliegenden Zahlenbeispiel wird angenommen, dass die Kommunikation in Kanal 2 des DSP3 geendet hat und eine entsprechende Meldung an den DLC-Prozess DLC3 des DSP3 gesendet wurde.

Nach Beginn bzw. Aufruf des Prozesses 600 wird in Schritt 610 die Meldung über das Ende der Kommunikation in dem Kanal k empfangen.

Sodann wird in Schritt 620 ein neuer Wert $GP_{ist,neu}$ für den DSP berechnet, der sich aus dem Wegfall des Performancewerts PpC für den Kanal k ergibt. Die Berechnung folgt der nachstehenden Beziehung:

$$GP_{ist,neu} = GP_{ist} - PpC(k)$$
$$= 114 - 14$$
$$= 100 \qquad\qquad\qquad \text{(Formel 9)}$$

Daraufhin wird in Schritt 630 die Kanalbelegungstabelle aktualisiert. D.h., der Wert für den Codec in Kanal k wird auf "0" gesetzt. Im vorliegenden Zahlenbeispiel (k=2) ergibt sich die Kanalbelegung nach Aktualisierung gemäß nachstehender Tabelle:

Tabelle 14: Kanalbelegung nach Kanalfreigabe

| Kanal k | 1 | 2 | 3 | ... |
|---------|-------|-----|-------|-----|
| Codec | G.723 | (-) | G.729 | ... |
| PpC | 14 | 0 | 20 | ... |

Wie in Tabelle 14 ersichtlich, wurden die Werte für Kanal 2, die zuvor durch die Werte für T.38 belegt waren (vgl. Tabelle 1) gelöscht. Falls die Gesamtperformance in den Basisdaten BD des DSP enthalten ist, wird dort der Wert $GP_{ist}$ durch den neuen Wert $GP_{ist,neu}$ überschrieben.

Schließlich wird in Schritt 640 der neue Wert für $GP_{ist} = GP_{ist, neu}$ an den DLB-Prozess gemeldet. Danach endet der Prozess 600.

Im DLB-Prozess wird, obschon in der Figur nicht näher dargestellt, die Performancetabelle mit dem neuen $GP_{ist}$ für den meldenden DSP aktualisiert, wie es der nachstehenden Tabelle zu entnehmen ist:

Tabelle 15: Performancetabelle nach Kanalfreigabe

| DSP | $GP_{max}$ | $GP_{ist}$ | $GP_{inProc}$ | $PpC_{max}$ | $H_{max}$ |
|-----|------------|------------|---------------|-------------|-----------|
| 1 | 100 | 90 | 0 | 20 | 24 |
| 2 | 200 | 120 | 0 | 25 | 30 |
| 3 | 200 | **100** | 1 | 25 | 30 |
| 4 | 120 | 70 | 2 | 10 | 16 |

<Abwandlungen>

Eine Zurückweisung eines Codecwechsel in Schritt 535 (Fig. 5) bedeutet, dass der Hysteresebedarf für den DSP zu gering angenommen wurde. In einem hier nicht weiter beschriebenen oder dargestellen Prozess können Zurückweisungen von Codecwechseln beobachtet werden und kann der Hysteresebedarf ggf. erhöht werden, wenn eine Zurückweisung sehr oft vorkommt. Ebenso ist es denkbar, einen Prozess vorzusehen, der bei häufigen Zurückweisungen von Kanalbelegungsanforderungen in Schritt 325 (Fig. 3) den Hysteresebedarf für alle oder einzelne DSPen verringert.

Nach einer Zurückweisung eines Codecwechsels kann der DLB-Prozess versuchen, durch Ausführen des Prozesses 300 gemäß Fig. 3 einen freien DSP zu finden und die den Codecwechsel anfordernde Kommunikationsverbindung mit dem neu angeforderten Codec auf einen anderen DSP zu verteilen.

Liste der Bezugzeichen und Symbole

| | |
|-----|-----|
| 100 | System |
| 111-114 | Digitale Signalprozessoren DSP1 - DSP4 |
| 120 | Host-Prozessor |
| 130 | DSP-Lastausgleichsprozess (DLB-Prozess) |
| 141-144 | DSP-Laststeuerungsprozesse (DLC-Prozesse) DLC1 - DLC 4 |

| 150 | Speicher |
| 160 | DLB-Speicherbereich |
| 171-174 | DLC-Speicherbereiche |
| 200 | DLC-Meldeprozess (2xx: Prozess-Schritte) |
| 300 | DLB-Kanalanforderungsprozess (3xx: Prozess-Schritte) |
| 400 | DLC-Kanalanforderungsprozess (4xx: Prozess-Schritte) |
| 500 | DLC-Kanalwechselprozess (5xx: Prozess-Schritte) |
| 600 | DLC-Kanalfreigabeprozess (6xx: Prozess-Schritte) |

| i | Laufvariable für Codecs |
| k | Laufvariable für Kanäle |
| n | Anzahl von unterstützten Codecs in einem DSP |
| r | relative Lastreserve |

| BD | Basisdaten |
| DLB | DSP-Lastausgleich (DSP Load Balancing) |
| DLC | DSP-Laststeuerung (DSP Load Control) |
| DSP | Digitaler Signalprozessor |
| GP | Gesamtperformance |
| $GP_{ist}$ | Gesamtperformance eines DSP |
| $GP_{max}$ | maximale Gesamtperformance eines DSP |
| $H_{max}$ | maximale Hysterese eines DSP |
| HB | Hysteresebedarf eines DSP |
| K | Anzahl der Kanäle in einem DSP |
| KT | Kanalbelegungstabelle |
| PpC | Performancebedarf eines Codec (Performance per Codex) |
| $PpC_{max}$ | maximaler Performancebedarf eines DSP |
| $PpC_{min}$ | minimaler Performancebedarf eines DSP |
| PT | Performancetabelle |

Die vorstehende Liste ist integraler Bestandteil der Beschreibung.

**Patentansprüche**

1. Verfahren zur Kanalverwaltung auf digitalen Signalprozessoren, bei dem die Kanalverwaltung zu jedem Zeitpunkt anhand einer momentanen Auslastung jedes digitalen Signalprozessors unter Berücksichtigung eines tatsächlichen Leistungsbedarfs jedes Kanals und eines maximalen Gesamtleistungsvermögens jedes digitalen Signalprozessors erfolgt,
**dadurch gekennzeichnet, dass** bei der Ermittlung der Auslastung eines betrachteten digitalen Signalprozessors ein Sicherheitszuschlag zur tatsächlichen Beanspruchung durch gegenwärtig belegte oder zu belegende Kanäle berücksichtigt wird,
wobei der Sicherheitszuschlag aus einer Differenz eines maximalen Leistungsbedarfs und eines minimalen Leistungsbedarfs aller von dem betrachteten digitalen Signalprozessor unterstützten Codecs und einem Erhöhungsfaktor berechnet wird, und
wobei die Differenz den größtmöglichen Leistungsbedarfssprung angibt, der bei einem Wechsel von dem Codec mit dem geringsten Leistungsbedarf zu dem Codec mit dem größten Leistungsbedarf eintreten würde, während der Erhöhungsfaktor angibt, wie viele solche größtmöglichen Leistungsbedarfssprünge gleichzeitig handhabbar sein sollen.

2. Verfahren gemäß Anspruch 1, **dadurch gekennzeichnet, dass** der Erhöhungsfaktor, die Leistungsbedarfswerte der unterstützten Codecs und das maximale Gesamtleistungsvermögen vorab für jeden digitalen Signalprozessor bestimmt werden.

3. Verfahren gemäß Anspruch 1, **dadurch gekennzeichnet, dass** die Kanalverwaltung durch eine zentrale Instanz und eine Mehrzahl von dezentralen Instanzen durchgeführt wird, wobei jede dezentrale Instanz einem digitalen Signalprozessor individuell zugeordnet ist.

**4.** Verfahren gemäß Anspruch 3, **dadurch gekennzeichnet, dass** die dezentralen Instanzen eingerichtet und ausgelegt sind, um Leistungsdaten des jeweils zugeordneten digitalen Signalprozessors an die zentrale Instanz weiterzugeben.

**5.** Verfahren gemäß Anspruch 3 oder 4, **dadurch gekennzeichnet, dass** die dezentralen Instanzen durch die zentrale Instanz anforderbar sind.

**6.** Verfahren gemäß Anspruch 1, **dadurch gekennzeichnet, dass** das Verfahren die durch eine zentrale Instanz durchzuführenden Schritte aufweist:

- Empfangen einer Kanalanforderung;
- Bestimmen von digitalen Signalprozessoren, die für eine Kanalneubelegung zur Verfügung stehen, als freie digitalen Signalprozessoren, auf der Grundlage einer ersten Beziehung für jeden digitalen Signalprozessor zwischen einer momentanen Auslastung, eines maximalen Gesamtleistungsvermögens und eines Leistungsbedarfs gegenwärtig an den digitalen Signalprozessor gerichteten Kanalneubelegungsanfragen, wobei die erste Beziehung vorzugsweise einen Sicherheitszuschlag aufweist; und
- falls die Bestimmung freier digitalen Signalprozessoren ergibt, dass kein digitaler Signalprozessor frei ist, Zurückweisen der Kanalanforderung, oder
- anderenfalls, Bestimmen desjenigen digitalen Signalprozessors, der unter allen freien digitalen Signalprozessoren eine geringste momentane Auslastung aufweist, als nominierten digitalen Signalprozessor, auf der Grundlage einer zweiten Beziehung für jeden freien digitalen Signalprozessor zwischen einer momentanen Auslastung, eines maximalen Gesamtleistungsvermögens und eines Leistungsbedarfs gegenwärtig an den digitalen Signalprozessor gerichteten Kanalneubelegungsanfragen, wobei jeweils der Leistungsbedarf einer Kanalneubelegungsanfrage vorzugsweise auf der Grundlage des größten Leistungsbedarfs unter allen von dem digitalen Signalprozessor unterstützten Codecs bestimmt wird, und Richten einer Kanalneubelegungsanfrage an eine dezentrale Instanz, die dem nominierten digitalen Signalprozessor zugeordnet ist.

**7.** Verfahren gemäß Anspruch 6, **dadurch gekennzeichnet, dass** das Verfahren die durch eine dezentrale Instanz durchzuführenden Schritte aufweist:

- Empfangen einer Kanalneubelegungsanfrage von der zentralen Instanz;
- Prüfen, ob ein Kanal des digitalen Signalprozessors frei ist, auf der Grundlage einer dritten Beziehung zwischen einer momentanen Auslastung, einem maximalen Gesamtleistungsvermögen und einem größten Leistungsbedarf aller von dem digitalen Signalprozessor unterstützten Codecs, wobei die dritte Beziehung vorzugsweise einen Sicherheitszuschlag aufweist; und
- falls kein Kanal frei ist, Zurückweisen der Kanalneubelegungsanfrage, oder
- anderenfalls, Bestätigen der Kanalneubelegungsanfrage, wenn ein Kanal frei ist, oder an die zentrale Instanz, wobei vorzugsweise zusätzlich die momentane Auslastung unter Berücksichtigung des tatsächlichen Leistungsbedarfs für einen angeforderten Codec neu berechnet und an die zentrale Instanz gemeldet wird.

**8.** Vorrichtung zur Kanalverwaltung auf digitalen Signalprozessoren, **dadurch gekennzeichnet, dass** die Vorrichtung zur Durchführung eines Verfahrens nach einem der vorstehenden Ansprüche eingerichtet und ausgelegt ist.

**Claims**

**1.** A method for channel management on digital signal processors, in which channel management is carried out at any time on the basis of a current capacity utilization of each digital signal processor, taking into account an actual performance requirement for each channel and a maximum total performance capacity of each digital signal processor,
**characterized in that** in determining the capacity utilization of a digital signal processor in question, a safety margin for the actual utilization by channels that are currently assigned or will be assigned is taken into account,
wherein the safety margin is calculated from a difference between a maximum performance requirement and a minimum performance requirement of all codecs supported by the digital signal processor in question and an increase factor, and
wherein the difference indicates the greatest possible performance requirement jump that would occur during a change from the codec having the lowest performance requirement to the codec having the highest performance requirement, while the increase factor indicates how many such greatest possible performance requirement jumps can be handled simultaneously.

2. The method according to claim 1, **characterized in that** the increase factor, the performance requirement values of the supported codecs, and the maximum total performance capacity are determined in advance for each digital signal processor.

3. The method according to claim 1, **characterized in that** the channel management is carried out by one central entity and a plurality of decentralized entities, wherein each decentralized entity is individually assigned to a digital signal processor.

4. The method according to claim 3, **characterized in that** the decentralized entities are equipped and configured to transmit performance data for the digital signal processor assigned to them to the central entity.

5. The method according to claim 3 or 4, **characterized in that** the decentralized entities can be requested by the central entity.

6. The method according to claim 1, **characterized in that** the method comprises the following steps to be carried out by a central entity:

   - receiving a channel request;
   - determining digital signal processors that are available for a new channel assignment, as available digital signal processors, on the basis of a first relationship for each digital signal processor between a current capacity utilization, a maximum total performance capacity, and a performance requirement of new channel assignment requests currently being directed to the digital signal processor, wherein the first relationship preferably has a safety margin; and
   - if the determination of available digital signal processors shows that no digital signal processor is available, rejecting the channel request, or
   - otherwise, determining the digital signal processor that has the lowest current capacity utilization among all available digital signal processors as the designated digital signal processor, on the basis of a second relationship for each available digital signal processor between a current capacity utilization, a maximum total performance capacity, and a performance requirement of new channel assignment requests currently being directed to the digital signal processor, wherein in each case, the performance requirement of a new channel assignment request is determined preferably on the basis of the greatest performance requirement among all codecs supported by said digital signal processor, and directing a new channel assignment request to a decentralized entity that is assigned to the designated digital signal processor.

7. The method according to claim 6, **characterized in that** the method comprises the following steps to be carried out by a decentralized entity:

   - receiving a new channel assignment request from the central entity;
   - checking to see whether a channel of the digital signal processor is available, on the basis of a third relationship between a current capacity utilization, a maximum total performance capacity, and a greatest performance request of all codecs supported by the digital signal processor, wherein the third relationship preferably has a safety margin; and
   - if no channel is available, rejecting the new channel assignment request, or
   - otherwise, if a channel is available, confirming the new channel assignment request or to the central entity, wherein the current capacity utilization is preferably also recalculated, taking the actual performance requirement for a requested codec into account, and this recalculated current capacity utilization is reported to the central entity.

8. A device for channel management on digital signal processors, **characterized in that** the device is equipped and configured for carrying out a method according to any of the preceding claims.

**Revendications**

1. Procédé de gestion de canal sur des processeurs de signal numériques, dans lequel la gestion de canal a lieu à chaque moment à l'aide d'une exploitation momentanée de chaque processeur de signal numérique en tenant compte d'un besoin de puissance effectif de chaque canal et d'une capacité de puissance totale maximum de chaque processeur de signal numérique,

**caractérisé en ce que** lors de la détermination de l'exploitation d'un processeur de signal numérique considéré, un supplément de sécurité est pris en compte pour l'exploitation effective par des canaux à occuper ou occupés actuellement,

dans lequel le complément de sécurité est calculé à partir d'une différence d'un besoin de puissance maximum et d'un besoin de puissance minimum de tous les codecs supportés par le processeur de signal numérique considéré et d'un facteur d'augmentation, et

dans lequel la différence indique le plus grand saut de besoin de puissance possible, qui aurait lieu dans le cas d'un changement du codec avec le plus faible besoin de puissance au codec avec le plus grand besoin de puissance, pendant que le facteur d'augmentation indique combien de ces plus grands sauts de besoin de puissance possibles doivent pouvoir être gérés en même temps.

2. Procédé selon la revendication 1, **caractérisé en ce que** le facteur d'augmentation, les valeurs de besoin de puissance des codecs supportés et la capacité de puissance totale maximum sont déterminés au préalable pour chaque processeur de signal numérique.

3. Procédé selon la revendication 1, **caractérisé en ce que** la gestion de canal est effectuée par une instance centrale et une pluralité d'instances décentralisées, dans lequel chaque instance décentralisée est associée individuellement à un processeur de signal numérique.

4. Procédé selon la revendication 3, **caractérisé en ce que** les instances décentralisées sont aménagées et conçues pour transmettre des données de puissance du processeur de signal numérique respectivement associé à l'instance centrale.

5. Procédé selon la revendication 3 ou 4, **caractérisé en ce que** les instances décentralisées peuvent être demandées par l'instance centrale.

6. Procédé selon la revendication 1, **caractérisé en ce que** le procédé présente les étapes à effectuer par l'instance centrale :

   - réception d'une demande de canal ;
   - détermination de processeurs de signal numériques, qui sont disponibles pour une nouvelle occupation de canal, en tant que processeurs de signal numériques libres, sur la base d'une première relation pour chaque processeur de signal numérique entre une exploitation momentanée, une capacité de puissance totale maximum et un besoin de puissance de demandes de nouvelle occupation de canal adressées actuellement au processeur de signal numérique, dans lequel la première relation présente de préférence un complément de sécurité ; et
   - si la détermination de processeurs de signal numériques libres révèle qu'aucun processeur de signal numérique n'est libre, rejet de la demande de canal, ou
   - sinon, détermination du processeur de signal numérique, qui présente parmi tous les processeurs de signal numériques libres une plus faible exploitation momentanée, en tant que processeur de signal numérique nommé, sur la base d'une deuxième relation pour chaque processeur de signal numérique libre entre une exploitation momentanée, une capacité de puissance totale maximum et un besoin de puissance de demandes de nouvelle occupation de canal adressées actuellement au processeur de signal numérique, dans lequel respectivement le besoin de puissance d'une demande de nouvelle occupation de canal est déterminé de préférence sur la base du plus grand besoin de puissance parmi tous les codecs supportés par le processeur de signal numérique, et adressage d'une demande de nouvelle occupation de canal à une instance décentralisée, qui est associée au processeur de signal numérique nommé.

7. Procédé selon la revendication 6, **caractérisé en ce que** le procédé présente les étapes à effectuer par une instance décentralisée :

   - réception d'une demande de nouvelle occupation de canal de l'instance centrale ;
   - vérification si un canal du processeur de signal numérique est libre, sur la base d'une troisième relation entre une exploitation momentanée, une capacité de puissance totale maximum et un plus grand besoin de puissance de tous les codecs supportés par le processeur de signal numérique, dans lequel la troisième relation présente de préférence un complément de sécurité ; et
   - si aucun canal n'est libre, rejet de la demande de nouvelle occupation de canal, ou

- sinon, confirmation de la demande de nouvelle occupation de canal, si un canal est libre, ou à l'instance centrale, dans lequel de préférence en plus l'exploitation momentanée en tenant compte du besoin de puissance effectif pour un codec demandé est recalculé et signalé à l'instance centrale.

8.  Dispositif de gestion de canal sur des processeurs de signal numériques, **caractérisé en ce que** le dispositif est aménagé et conçu pour la réalisation d'un procédé selon l'une quelconque des revendications précédentes.

Fig. 1

<u>200</u>

(DLC)

Start

Bestimme GP, PpC(i), HB        210

Berechne        220

$$PpC_{max} = \max (PpC(i)) \; \forall i$$

$$PpC_{min} = \min (PpC(i)) \; \forall i$$

$$H_{max} = HB \cdot (PpC_{max} - PpC_{min})$$

230

Melde $PpC_{max}$, $PpC_{min}$, $H_{max}$ an DLB

Ende

**Fig. 2**

**Fig. 3**

300
(DLB)

Start

Ermittle freie DSP anhand
$GP_{ist} + H_{max} + (GP_{in\ Proc} + 1) \cdot PpC_{max} < GP_{max}$ — 310

320 — $\exists$ freie DSP ? — n → Weise Kanalanforderung zurück — 325

j

330 — Berechne relative Lastreserve $\forall$ freien DSP:
$$r = \frac{GP_{max} - GP_{ist} - (GP_{in\ Proc} + 1) \cdot PpC_{max}}{PpC_{max}}$$

Nominiere DSP mit geringster Last (= max (r))

350 — Passe Performancetabelle an:
$GP_{in\ Proc} + 1$ für nominierten DSP

360 — Leite Anfrage an DLC des nominierten DSP

Ende

400

(DLC)

Start

Berechne Performance $GP_{ist} = \sum\limits_{k} PpC(k)$ — 410

420

DSP frei:

$GP_{ist} + PpC_{max} + H_{max} < GP_{max}$

?

j → Ermittle freien Kanal — 430

Vorbelege freien Kanal mit $PpC_{max}$ — 440

n

460

n

$T > T_{max}$

?

450

n ← Codec bestimmt ?

465

j

Lösche Vorbelegung

470

Korrigiere Kanalbelegung mit PpC

j

425

Weise Anfrage zurück

Berechne Performance $GP_{ist}$ — 480

Bestätige Kanalbelegung und melde $GP_{ist}$ an DLB — 490

Ende

Fig. 4

**500**

(DLC)

Start

Empfange Codecwechselanfrage für Kanal k auf Codec i

510

Berechne neue Gesamtperformance
$GP_{neu} = GP_{ist} - PpC\,(k) + PpC\,(i)$

520

530 — Wechsel möglich: $GP_{neu} < GP_{max}$ ?

535 — Weise Anfrage zurück

n

j

540 — Aktualisiere Kanalbelegungstabelle

550 — Melde $GP_{ist} = GP_{neu}$ an DLB

560 — Melde neuen Codec i an Kommunikationssteuerungsprozess

Ende

**Fig. 5**

<u>600</u>

(DLC)

```
            ┌─────────┐
            │  Start  │
            └─────────┘
                 │
                 ▼
┌──────────────────────────────────────────┐
│ Empfange Kommunikationsende in Kanal k    │ ── 610
└──────────────────────────────────────────┘
                 │
                 ▼
┌──────────────────────────┐
│ Berechne $GP_{ist}$ neu   │ ── 620
└──────────────────────────┘
                 │
                 ▼
┌──────────────────────────────────────────┐
│ Aktualisiere Kanalbelegungstabelle        │ ── 630
└──────────────────────────────────────────┘
                 │
                 ▼
┌──────────────────────────┐
│ Melde $GP_{ist}$ an DLB   │ ── 640
└──────────────────────────┘
                 │
                 ▼
            ┌─────────┐
            │  Ende   │
            └─────────┘
```

**Fig. 6**

**EP 2 746 945 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7929441 B1